# EUROPÄISCHE PATENTSCHRIFT

(11) **EP 0 886 772 B1**
(45) Veröffentlichungstag und Bekanntmachung des Hinweises auf die Patenterteilung: **08.08.2001**
(21) Anmeldenummer: 97908200.5
(22) Anmeldetag: 07.03.1997
(51) Int. Cl.: G01N 21/25, G01J 3/10

(54) **ANALYSENSYSTEM**
ANALYSIS SYSTEM
SYSTEME D'ANALYSE

(30) Priorität: 15.03.1996 DE 19610168
(43) Veröffentlichungstag der Anmeldung: 30.12.1998
(73) Patentinhaber: Forschungszentrum Karlsruhe GmbH, 76133 Karlsruhe (DE)
(72) Erfinder: RINKE, Günter, D-76356 Weingarten (DE); HARTIG, Christian, D-76344 Eggenstein-Leopoldshafen (DE)
(86) Internationale Anmeldenummer: EP9701168
(87) Internationale Veröffentlichungsnummer: WO9735178

(56) Entgegenhaltungen:
- DE-A- 4 215 165
- DE-A- 4 232 371
- DE-B- 1 141 094
- US-A- 4 350 441
- PATENT ABSTRACTS OF JAPAN vol. 006, no. 203 (P-148), 14.Oktober 1982 & JP 57 111422 A (SHIMAZU SEISAKUSHO KK), 10.Juli 1982,
- PATENT ABSTRACTS OF JAPAN vol. 008, no. 165 (P-291), 31.Juli 1984 & JP 59 061758 A (KOMATSU SEISAKUSHO KK), 9.April 1984,

## Beschreibung

Die Erfindung betrifft ein Analysensystem bestehend aus mindestens zwei Lichtquellen mit einem Strahlteiler nach dem Oberbegriff des Patentanspruchs 1.

Bei einem Spektralfotometer führt das über einen bestimmten Wellenlängenbereich emittierte Spektrum von Lichtquellen, z. B. Glühlampen, sowie die spektrale Empfindlichkeit der zur Detektion benutzten Sensoren zu großen Signalunterschieden innerhalb des zu erfassenden Spektralbereiches. Ein besonders krasser Fall ist die Verwendung von Glühlampen zusammen mit Siliziumfotodiodenarrays: Die Intensität einer Glühlampe fällt bekanntlich zum Blauen stark ab. Gleichzeitig sinkt auch die Empfindlichkeit von Siliziumfotodioden zum Blauen hin. Dadurch wird der Dynamikbereich des als Mehrkanaldetektor eingesetzten Fotodiodenarrays schlecht ausgenutzt, was ein spektral abhängiges Rauschen zur Folge hat. Noch störender ist das Falschlicht am kurzwelligen Ende des Meßbereiches, da die Intensität hier sehr gering ist und kaum über dem Streulicht liegt. Das Streulicht wirkt sich nun aber gerade in diesem Beispiel besonders stark aus, weil eine Glühlampe sehr viel Strahlung im nahen Infraroten emittiert und Siliziumfotodioden dort ihre maximale Empfindlichkeit haben. Wird nun ein solches Spektrometersystem für eine Absorptionsmessung eingesetzt, so werden die zu untersuchenden Absorptionsspektren der Gase, Flüssigkeiten oder Feststoffe stark verfälscht, so daß eine quantitative Konzentrationsbestimmung durch Ausnützung des kurzwelligen Meßbereiches nicht möglich ist.

Eine bisher oft angewendete Lösung dieses Dilemmas besteht in der Verwendung einer Halogenlampe. Diese Lampen können wegen des in ihnen wirksamen Halogen-Kreisprozesses bei sehr hoher Glühfadentemperatur betrieben werden, was nicht nur zu einer insgesamt hohen Lichtstärke führt, sondern auch zu einer relativ guten Ausbeute an blauen Spektralanteilen. Leider ist die Lebensdauer von Halogenlampen auf ca. 1500 Stunden (2 Monate) begrenzt, was für Prozeßmeßgeräte, die Tag und Nacht in Betrieb sind, mit erhöhter Wartung verbunden ist. Leider läßt sich die Lebensdauer von Halogenlampen durch Betrieb bei Unterspannung nur geringfügig verlängern, da der zulässige Spannungsbereich stark eingeschränkt ist: Bei zu niedriger Spannung wird die Glühfaden- und Glaskolbentemperatur geringer, so das der Halogenkreisprozeß nicht mehr richtig funktioniert und z. B. Niederschläge (Schwärzungen) auf der Innenseite des Glaskolbens entstehen.

Um den Signalabfall im kurzwelligen Teil des sichtbaren Lichtes zu kompensieren sind folgende Verfahren bekannt:

Bei scannenden Spektralfotometern, die ein Detektorelement und ein sich drehendes Beugungsgitter aufweisen, wird ein zweiter Strahlengang mit zweitem Detektor verwendet. In Abhängigkeit von der Wellenlänge und damit von der Signalintensität wird der Verstärker für den ersten Detektor oder bei Photomultipliern die Hochspannung nachgeregelt. Zusätzlich setzt man eine Deuteriumlampe ein, die für "Licht" von 200 nm bis 400 nm sorgt.

Diese Lösung hat mehrere Nachteile: Zum einen eignet sich dieses Konzept wegen der Mechanik (Gitterdrehung) nur für das Labor und nicht für die Messung unter rauhen Industriebedingungen. Nachteilig ist auch die kurze Glühlampenlebensdauer, da die Lampe mit hoher Leistung betrieben werden muß, um genügend blaue Strahlung abzugeben. Die Deuteriumlampe hat ohnehin nur eine kurze Lebensdauer von ca. 3 Monaten im Dauerbetrieb. Weiterhin hat ein scannendes System, auch im Labor, nie die gute Wellenlängenreproduzierbarkeit wie ein starres Array-Spektrometersystem. Schließlich sind mit der erforderlichen Deuteriumlampe enorme Kosten verbunden.

Array-Spektrometer mit feststehendem Gitter und einem Mehrkanaldetektor (Fotodioden-Array) sind stabiler und zeigen eine gute Wellenlängenreproduzierbarkeit. Die variierende Signalintensität wird durch die Kombination von Halogen- und Deuteriumlampe, zumindest teilweise, kompensiert.

Nachteile sind die kurze Lebensdauer beider Lampen sowie die Kosten durch die Deuteriumlampe.

Günstiger sind UV-Array-Spektrometer, die mit einer einzigen Lichtquelle, einer Xenon-Blitzlampe, ausgestattet sind, wie dies in DE-PS 4232371 C2 beschrieben ist.

Der einzige Nachteil dieser Anordnung besteht in den Kosten durch die Xenon-Blitzlampe sowie der erforderlichen Transferoptik, um die Bewegungen des Lichtbogens zu kompensieren. Dieser Aufwand ist nur für den UV-Bereich gerechtfertigt, nicht jedoch für das Sichtbare.

Eine weitere Möglichkeit besteht darin, unmittelbar vor das Fotodiodenarray eine Blende anzuordnen, die bei den Array-Elementen mit starken Lichtintensitäten bzw. großer Fotodiodenempfindlichkeit Verengungen aufweist. Ein entsprechendes Verfahren ist in EP 0260013 A3 beschrieben. Nachteilig ist die aufwendige Justierung und zusätzliches Streulicht.

Aus Yair Talmi, Zeitschrift Applied Optics, Band 19, Heft 9, 1. Mai 1980, Seiten 1401 ff ist ferner bekannt, den Dynamikbereich von Array-Spektrometern dadurch zu verbessern, indem die Integrationszeit des Arrays periodisch geändert wird. So kann bei kurzer Integrationsdauer der Bereich starker Signale ausgewertet werden, während bei längerem Lichtsammeln die schwächeren Bereiche gemessen werden. Das wahre Spektrum wird bei diesem Verfahren durch Zusammenfügen der nicht übersteuerten Spektralbereiche aller Aufnahmen unterschiedlicher Bestrahlungsdauer erreicht.

Nachteilig daran ist, daß zum einen eine kompliziertere Elektronik zur Ansteuerung der Arrays erforderlich ist und zum anderen der Dunkelstrom unterschiedlich spektral variiert und sich das Signal-Rausch-Verhältnis verschlechtert.

Der Erfindung liegt die Aufgabe zugrunde, ein Anaysensystem mit einer optischen Strahlungsquelle zu entwickeln, das zusammen mit einem Array-Spektrometersystem den Dynamikbereich des Photodiodenarrays auf einfache Weise besser ausnutzt und dadurch das Falschlicht reduziert.

Gelöst wird diese Aufgabe durch die Merkmale des Patentanspruchs 1. Die Unteransprüche beschreiben vorteilhafte Ausgestaltungen der Erfindung.

Zum einen werden in den Strahlengang optische Filter eingesetzt, die einen solchen spektralen Transmissionsverlauf haben, daß dieser den zum kurzwelligen Ende des Spektrums abfallenden Meßsignalen entgegenwirkt; die Transmission steigt also zum Kurzwelligen. Zum anderen wird im kurzwelligen Bereich zusätzlich zur Glühlampe eine blaue Leuchtdiode eingesetzt, die in diesem Spektralbereich eine besonders hohe Intensität hat.

Ein weiterer wesentlicher Punkt ist der Einsatz einer Vakuum- oder gasgefüllten Lampe, die mit Unterspannung betrieben wird. Während dies, wie erwähnt, bei Halogenlampen nicht möglich ist, können Vakuum- oder gasgefüllte Lampen zwecks Verbesserung der Lebensdauer mit Unterspannung betrieben werden. So ist es beispielsweise möglich, die Lebensdauer einer Glühlampe um den Faktor 10 zu verlängern, wenn man sie mit 20 % Unterspannung betreibt. Damit kann man beispielsweise die Lebensdauer einer typischen Vakuumlampe, die bei Nennspannung für 3000 Stunden konzipiert ist, mit 20% Unterspannung eine Lebensdauer von 30.000 Stunden erreichen. Die dadurch bedingte, geringere Lichtstärke ist bei den empfindlichen optischen Detektoren im sichtbaren Spektralbereich akzeptabel. Die gasgefüllte Lampe besitzt gegenüber der Vakuumlampe den Vorteil, bei gleicher Glühfadentemperatur eine höhere Lebensdauer zu erreichen, weil thermisch vom Glühfaden emittierte Wolframatome, bedingt durch die langsamere Diffusion im Gas, sich nicht so schnell am Glaskolben niederschlagen. Andererseits leitet bekannterweise jedes Gas Wärme, so daß die Kolbentemperatur einer gasgefüllten Lampe wesentlich höher ist als die einer Vakuumglühlampe. Für thermisch kritische Anwendungen sollte man daher besser eine Vakuumlampe verwenden.

Die Vorrichtung wird im folgenden anhand eines Ausführungsbeispiels mit Hilfe der Figuren ausführlich erläutert.

Es zeigen
Fig. 1 Aufbau der Versuchsanordnung
Fig. 2 Spektraler Intensitätsverlauf einer Glühlampe
Fig. 3 Spektraler Intensitätsverlauf einer Glühlampe, mit zwei Korrekturfiltern
Fig. 4 Spektraler Intensitätsverlauf einer blauen LED mit zwei Korrekturfiltern
Fig. 5 Spektraler Intensitätsverlauf mit blauer LED und Glühlampe, mit zwei Korrekturfiltern
Fig. 6 Fotometrischen Rauschen der Anordnung
Fig. 7 Spektraler Intensitätsverlauf der erfinderischen Anordnung mit 515 nm Kantenfilter zum Test des Streulichtverhaltens.

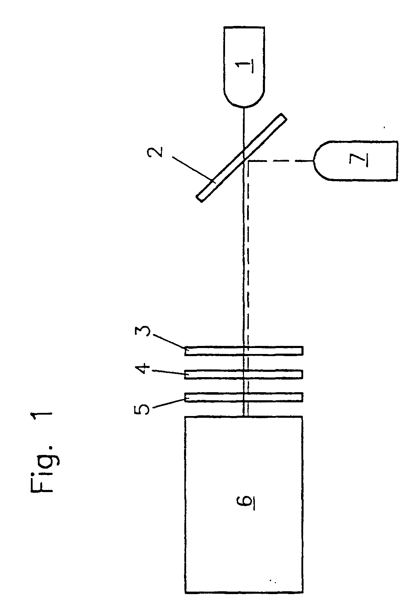

Fig. 1 zeigt schematisch den optischen Aufbau, mit dem alle folgenden Versuche durchgeführt wurden. Die Strahlung einer Glühlampe 1 gelangt ohne jegliche optische Abbildung über einen Strahlteiler 2 aus Glas und verschiedene Filter 3, 4, 5 auf ein Miniaturspektrometer 6. Solche Miniaturspektrometer sind kommerziell erhältlich und bestehen meist aus einem Eintrittsspalt, einem konkaven holografischen Reflexionsgitter und einem Silizium-Fotodioden-Array. Über den Strahlteiler 2 kann die Strahlung einer blauen Leuchtdiode 7 eingekoppelt werden. Für diese Untersuchungen wurde als Glühlampe 1 der Typ L1009, Fa. Gilway, USA, verwendet und mit 3,5 V und 450 mA betrieben. Neben dieser Lampentype wurden auch andere vakuum- und gasgefüllte Glühlampen sowohl bei Nennspannung als auch mit unterschiedlicher Unterspannung betrieben. Als blaue LED wurde der Typ ESB 44510, Fa. Oshino, eingesetzt. Die Ausgangssignale des Fotodiodenarrays wurden über die zugehörige Spektrometerelektronik und eine PC-Einschubkarte auf einen PC gegeben und dort grafisch dargestellt und ausgedruckt.

Zwischen Strahlteiler 2 und dem ersten Filter 3 ist bei diesem Aufbau noch eine Durchflußküvette angebracht (hier nicht dargestellt), die für diese Versuche aber ohne Bedeutung ist. Damit können speziell galvanische Bäder, die zahlreiche farbige Metallionen enthalten, quantitativ bestimmt werden.

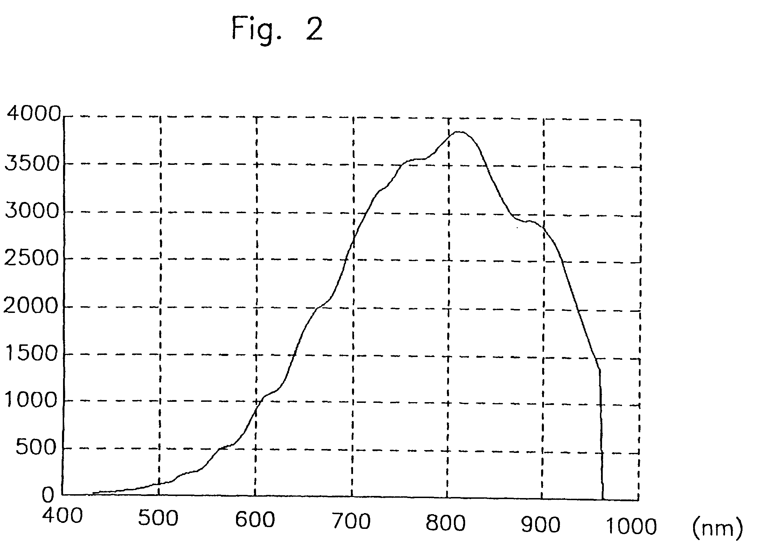

Fig. 2 zeigt den gemessenen Intensitätsverlauf, wenn nur die Glühlampe und keinerlei Filter verwendet werden. Dies ist der klassische Aufbau ohne jegliche Kompensation. Die erkennbaren, sinusförmigen Strukturen gehen auf das verwendete Spektrometer zurück und sind hier ohne Bedeutung. Bei 950 nm endet der Meßbereich des Spektrometers und geht deswegen abrupt auf Null. Obwohl das Spektrometer im Maximum optimal ausgesteuert ist (max. 4096 counts), ist die Intensität unterhalb 650 nm bereits kleiner als 50 % vom Maximalwert und unter 500 nm so schwach, daß keine exakten Auswertungen mehr möglich sind. Das Rauschen steigt dementsprechend für Wellenlängen kleiner 500 nm stark an. Der gut nutzbare Spektralbereich, bei dem die Intensität nicht viel kleiner als 50 % vom Maximalwert sein sollte, beträgt in diesem Fall also nur 650 nm bis 950 nm. Damit sind aber Substanzen, die unterhalb 650 nm absorbieren, nur ungenau und unterhalb 500 nm gar nicht mehr meßbar.

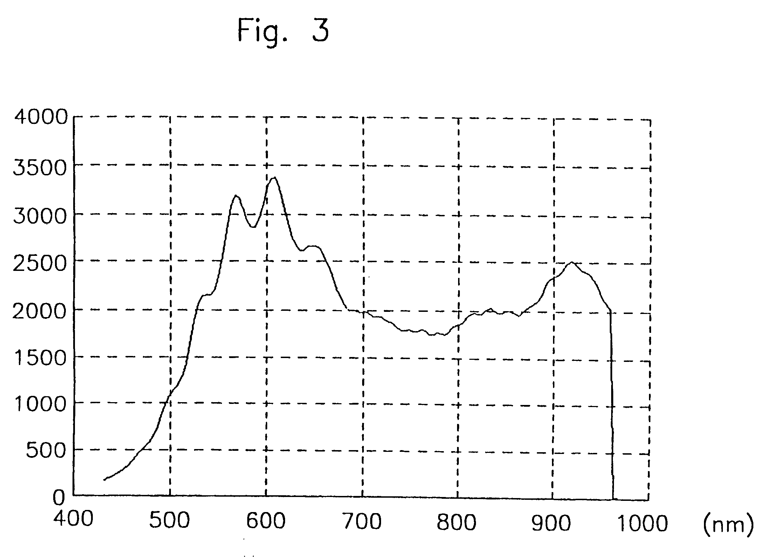

Um dem starken Intensitätsabfall zum Kurzwelligen zu begegnen, wurden ein oder zwei Farbglasfilter (Schott) eingesetzt. Fig. 3 zeigt als Beispiel eine Messung, bei der für die Filter 3, 4 zwei gleiche Farbglasfilter vom Typ BG 26, 3 mm dick, verwendet werden. Diese kommerziell erhältlichen Filter weisen ein Transmissionspektrum auf, das mit abnehmender Wellenlänge mehr Licht durchläßt. Aus diesem Grund werden die Wellenlängen um 600 nm angehoben. Der 50 % - Meßbereich vergrößert sich also mit dieser Maßnahme allein auf 520 nm bis 950 nm.

Erwähnt sei auch die folgende Beobachtung: Wird eines der beiden Filter mechanisch so verschoben, daß eine äußere Kante des Filters die optische Achse, gebildet aus Glühlampenmittelpunkt und Spektrometereintrittsspalt, schneidet, dann ergibt sich zwischen 580 nm und 950 nm ein resultierender Intensitätsverlauf, der nur um +/- 10 % um eine horizontale Linie variiert. Ursache dürften Reflexionseffekte an der Filterkante sein. Diese relativ glatte Kurve hat allerdings den Nachteil, daß der Kurvenverlauf stark von der Justierung aller optischen Bauteile abhängig ist.

Wird nur ein Filter BG 26 verwendet, resultiert eine Kurve ähnlich der Fig. 2, aber mit langsamerem Abfall zum Kurzwelligen und einer unteren 50 % Grenze von 550 nm. Eine nahezu flache Kurve kann durch ein Filter erreicht werden, dessen Dicke zwischen 3 und 6 mm liegt. Die optimale Dicke hängt insbesondere davon ab, bei welcher Spannung die Glühlampe (Unterspannung) betrieben wird. Wird z. B. die Glühlampe mit stark reduzierter Nennspannung betrieben, so verschiebt sich das Intensitätsmaximum der Glühlampe weiter in das Infrarot und der Blauanteil wird relativ zum Rotanteil schwächer. In diesem Fall müßte daher eine größere Dicke des Farbfilters gewählt werden, um dem entgegenzuwirken. Die gleichzeitig insgesamt abnehmende Lichtintensität ist nicht so wichtig, da dies durch eine längere Integrationszeit des Photodiodenarrays kompensiert werden kann.

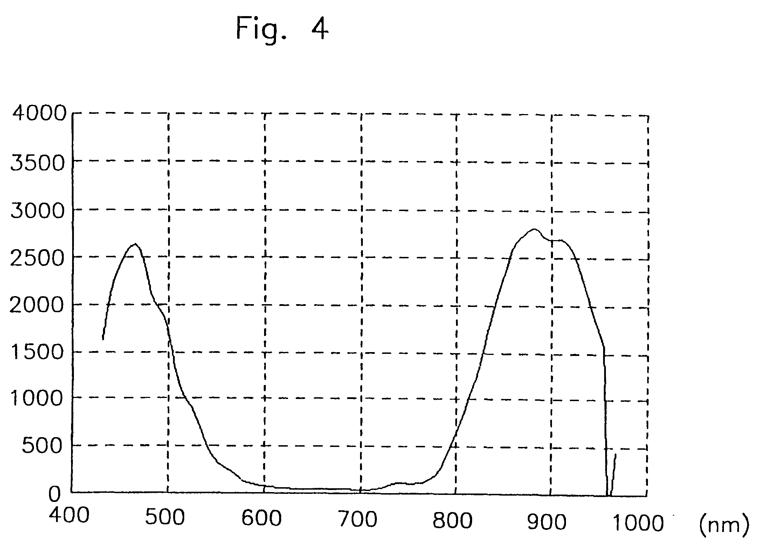

Um den spektralen Meßbereich noch weiter ins Blaue auszudehnen, wurde statt der Glühlampe 1 über den Strahlteiler 2 die Strahlung der blauen Leuchtdiode 7 eingekoppelt; die beiden BG 26 Filter 3,4 waren ebenfalls eingebaut. Das Ergebnis ist in Fig. 4 dargestellt. Die charakteristische Emission der blauen Leuchtdiode zwischen dem Meßbereichsbeginn des Spektrometers bei etwa 430 nm und 600 ist gut zu erkennen. Der zweite Peak mit Wellenlängen größer als 780 nm geht auf die zweite Ordnung des im Spektrometer eingesetzten Gitters zurück und zeigt, daß die Leuchtdiode schon ab 390 nm Licht emittiert, was durchaus den Herstellerangaben entspricht. Zur Unterdrückung dieser zweiten Ordnung wird ein Kantenfilter eingesetzt.

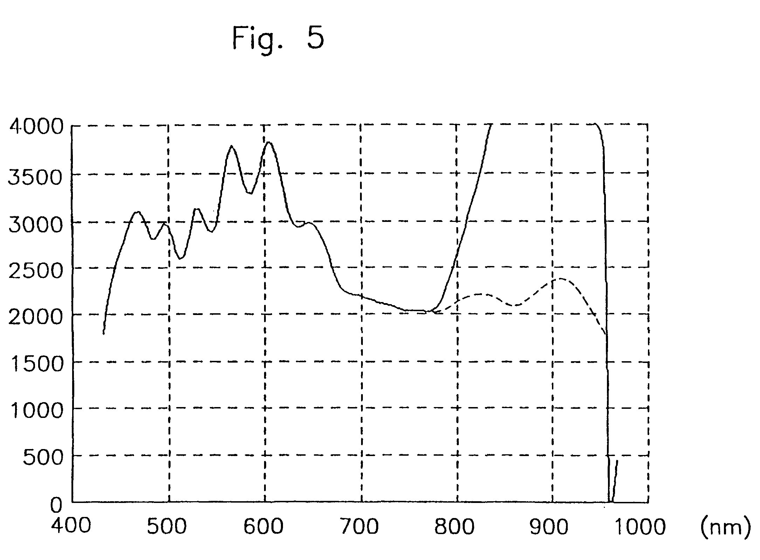

In Fig. 5 ist nun das Intensitätsspektrum dargestellt, das dem Aufbau entsprechend der Fig. 4 entspricht, nur ist die Glühlampe 1 auch eingeschaltet. Die Übersteuerung ab 780 nm aufwärts geht auf die 2. Ordnung der LED-Strahlung zurück. Mit einem geeigneten Kantenfilter 5, ergibt sich der gestrichelt eingezeichnete Verlauf. Der spektrale Meßbereich (50 %) dieser Anordnung kann nunmehr auf 440 nm bis 950 nm ausgedehnt werden.

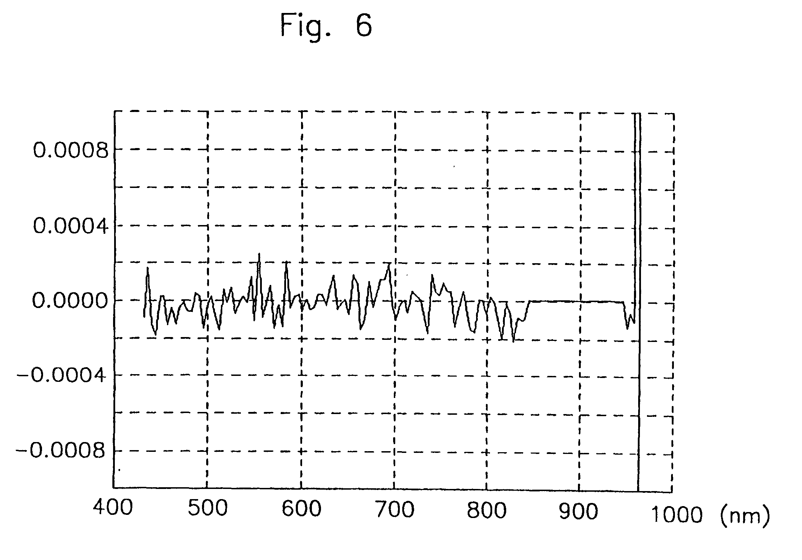

Zur Bestimmung des photometrischen Rauschens wurde zunächst eine solche Meßkurve im PC abgespeichert und nachfolgende Meßkurven durch die abgespeicherte Kurve dividiert. Diese Kurven, die der Lichtdurchlässigkeit oder besser Transmission, entsprechen, werden logarithmiert, was für Absorptionsmessungen nötig ist. Eine solche typische Kurve ist in stark gespreizter Darstellung bei einer Mittelung über 10 Aufnahmen, jede 30 ms integriert, in Fig. 6 gezeigt. Das Rauschen ist im gesamten Spektralbereich kleiner als ± 2 10⁻⁴ AU (absorbance units), was einer kleinsten, nachweisbaren Lichtintensitätsänderung von nur 0,05 % entspricht. Der glatte Bereich zwischen 840 nm und 940 nm geht übrigens auf die wegen des fehlenden geeigneten Kantenfilters resultierende Übersteuerung zurück und braucht nicht berücksichtigt zu werden.

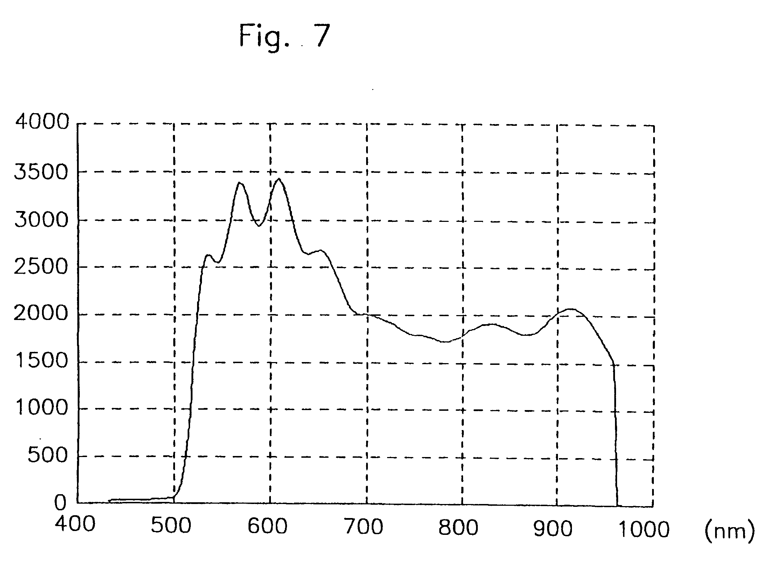

Zum Test des Streulichtes wurden verschiedene Filter mit Kanten zwischen 515 nm und 715 nm als Filter 5 zusätzlich in den Strahlengang gebracht. Als "worst case" seien hier die Ergebnisse für das 515 nm Filter dargestellt, da es alle Wellenlängen vom Langwelligen bis herab zu 515 nm noch durchläßt. Fig. 7 zeigt das daraus resultierende Spektrum. Im Bereich unterhalb 450 nm, wo das Kantenfilter mit Sicherheit kein Licht mehr durchläßt, werden nur ca. 30 counts gemessen. Bei einem mittleren Signal ohne 515 nm Filter von ca. 3000 counts in diesem Spektralbereich beträgt somit das Falschlicht max. 1 %. Nebenbei bemerkt ist jetzt natürlich auch die 2. Ordnung nicht mehr sichtbar, da sie durch das 515 nm Filter unterdrückt wird.

Ohne die erfinderischen Maßnahmen betrüge z. B. bereits bei 500 nm die Intensität nur 100 counts (s. Fig. 2), so daß das Falschlicht 30 % betrug.

Das Verfahren kann in verschiedenen Ausführungsbeispielen realisiert werden. Bei den oben beschriebenen Messungen wurde ein Aluminium-Block verwendet, der das Spektrometer, die Durchflußküvette, Filter, Glühlampe, Leuchtdiode und Strahlteiler enthält, wodurch sich eine gute Stabilität und eine homogene Temperaturverteilung ergibt. Es hat sich als besonders vorteilhaft erwiesen, die Glühlampe auf die optische Achse zu setzen und die Leuchtdiode 90° dazu. In diesem Fall passen die Intensitäten beider Lichtquellen gut zueinander. Es ist jedoch auch denkbar, daß bei anderen Typen von Lampen der umgekehrte Fall günstiger ist. So könnte eine UV-Lampe, z. B. Deuteriumlampe, direkt auf der optischen Achse angeordnet sein, während eine Glühlampe über den Strahlteiler eingekoppelt wird. Dies ist deswegen vorteilhaft, weil man sich Lichtverluste an der Quarzscheibe 2 bei der Glühlampe leisten kann, da deren langwellig ausgenutzte Emission auf in diesem Bereich empfindliche Siliziumphotodioden trifft.

Bei einer weiteren, untersuchten Anordnung wurden Lampe und Leuchtdiode direkt nebeneinander auf die optische Achse plaziert, so daß kein Strahlteiler notwendig ist. Es ergaben sich fast dieselben Meßresultate. Allerdings ist das Streulicht etwas größer und die Justierung kritischer.

Die Wahl des Kantenfilters 5 zur Elimination der 2. Ordnung bestimmt mehrere mögliche Spektralbereiche: Wird nur eine Glühlampe mit Farbglasfiltern 3, 4, aber ohne Leuchtdiode und ohne Kantenfilter 5 eingesetzt, kann ein spektraler Meßbereich von 500 nm bis 1000 nm einfach realisiert werden. Mit zusätzlicher Leuchtdiode und Kantenfilter bei 450 nm ist ein Bereich von 450 nm bis 900 nm machbar, der für Anwendungen in galvanischen Bädern besonders günstig ist. Wird ohne Kantenfilter, aber mit Glühlampe und Leuchtdiode gearbeitet, ist ein Bereich vom 380 nm bis 760 nm realisierbar.

Die Farbglasfilter und Kantenfilter können an verschiedene Stellen innerhalb des Strahlenganges angeordnet sein. Neben den im Ausführungsbeispiel dargestellten Positionen kann das Farbglasfilter beispielsweise auch direkt vor der Glühlampe angeordnet werden. Dadurch würde sogar die geringfügige Abschwächung der Leuchtdiode verringert. Das Kantenfilter kann vor die Leuchtdiode gesetzt werden. Allerdings wird in diesem Fall nur die 2. Ordnung der Leuchtdiode unterdrückt, während die wenn auch schwache 2. Ordnung der Glühlampe durchgelassen wird.

Der spektrale Verlauf des Farbglasfilters kann durch Variation der Filterdicke und den Filtertyp so gewählt werden, daß die spektrale Empfindlichkeit aller mit der optischen Strahlungsquelle gemäß dem Oberbegriff des Anspruchs 1 beleuchteten optischen Bauteile kompensiert wird. Dies bezieht sich beispielsweise auf unterschiedliche Spektrometertypen mit Gittern oder Prismen, auf verschiedene Array-Detektoren oder einfache Filterfotometer, bestehend aus Bandpaßfiltern und Einzeldetektoren.

Eine vorteilhafte Weiterbildung besteht auch darin, Kantenfilter und Farbglasfilter direkt auf das Array zu dampfen.

Dieses Analysensystem kann zur Bestimmung von Gasen, Flüssigkeiten oder Festkörpern eingesetzt werden, die im sichtbaren Spektralbereich gefärbt sind. Ein Anwendungsgebiet ist z. B. die Bestimmung der Hauptinhaltsstoffe oder Verunreinigungen in galvanischen Bädern wie z.. B. Chemisch-Nickel-, Hartchrom-, Chromatierungs- und Edelmetallbädern.

## Patentansprüche

1. Analysensystem bestehend aus mindestens zwei Lichtquellen mit einem Strahlteiler zum Zusammenführen der Strahlung der Lichtquellen, einer Küvette und einem Photodiodenarrayspektrometer, dadurch gekennzeichnet, daß
a) die eine Lichtquelle (1) eine Vakuum- oder gasgefüllte Glühlampe und keine Halogenlampe ist,
b) diese Lichtquelle (1) mit Unterspannung betrieben wird,
c) die zweite Lichtquelle (7) eine blaue Leuchtdiode ist,
d) im Strahlengang zwischen der einen Lichtquelle (1) oder der anderen Lichtquelle (7) und dem Photodiodenarrayspektrometer (6) ein optisches Filter (3) angeordnet ist, dessen spektraler Transmissionsverlauf dem Intensitätsabfall der Glühlampe (1) und der Empfindlichkeitsabnahme des Photodiodenarrays zu niedrigen Wellenlängen entgegenwirkt.

2. Verwendung des Analysensystems gemäß Anspruch 1, dadurch gekennzeichnet, daß das Analysensystem bei galvanischen Bädern, z. B. Chemisch-Nickel-, Hartchrom-, Chromatierungs- und Edelmetallbädern zur Messung von deren Hauptinhaltsstoffen oder Verunreinigungen eingesetzt wird.

## Claims

1. Analysis system, comprising at least two light sources with a beam splitter for combining the radiation of the light sources, a cell and a photodiode-array spectrometer, characterised in that
a) one light source (1) is a vacuum- or gas-filled filament lamp and not a halogen lamp,
b) this light source (1) is operated at low voltage,
c) the second light source (7) is a blue light-emitting diode, and
d) an optical filter (3) is disposed in the beam path between one light source (1) or the other light source (7) and the photodiode-array spectrometer (6), the spectral transmission behaviour of which filter counteracts the drop in intensity of the filament lamp (1) and the decrease in sensitivity of the photodiode array to low wavelengths.

2. Use of the analysis system according to claim 1, characterised in that the analysis system is used for galvanic baths, e.g. chemical nickel, hard chromium, chromating and noble metal baths to measure their main ingredients or impurities.

## Revendications

1. Système d'analyse constitué de deux sources lumineuses avec un séparateur de faisceaux servant à réunir les rayons des sources lumineuses, d'une cuvette et d'un spectromètre à photodiodes, caractérisé en ce que
a) l'une des sources lumineuses (1) est une lampe à vide ou à atmosphère gazeuse et non pas à halogène,
b) cette source lumineuse (1) fonctionne à minimum de tension,
c) la deuxième source lumineuse (7) est une diode électroluminescente bleue,
d) dans la trajectoire du faisceau entre l'une (1) ou l'autre source lumineuse (7) et le spectromètre à photodiode (6), un filtre optique (3) est placé dont l'évolution de transmission spectrale agit contre la chute d'intensité de la lampe (1) et la diminution de la sensibilité du dispositif à photodiodes vers de faibles longueurs d'ondes.

2. Emploi du système d'analyse selon la revendication 1, caractérisé en ce que le système d'analyse est utilisé pour des bains électrolytiques, p.ex. des bains chimiques de nickelage, au chrome dur, de chromatage et au métal précieux pour mesurer leurs constituants principaux ou impuretés.
